# EUROPEAN PATENT APPLICATION

(11) **EP 4 738 353 A1**
(43) Date of publication of application: **06.05.2026**
(21) Application number: 25211849.2
(22) Date of filing: 28.10.2025
(51) Int. Cl.: G10L 25/51

(54) **METHODS AND SYSTEMS FOR ENHANCING THE DETECTION OF FRAUDULENT AUDIO DATA**

(30) Priority: 05.11.2024 US 202418937161
(71) Applicant: Daon Technology, Douglas IM1 2LN (IM)
(72) Inventor: BLOUET, Raphael, Douglas (IM); BALCIUNAS, Linas, Douglas (IM); JOVANOVIC, Kosta, Douglas (IM); MANTECON, Ana, Douglas (IM); FLOOD, Gordon, Douglas (IM); PATEFIELD-SMITH, Martin, Douglas (IM)
(74) Representative: Murgitroyd & Company

(57) **Abstract**

A method for enhancing the detection of fraudulent audio data is provided that includes capturing audio data of a user speaking during an authentication transaction, dividing the audio data into segments, determining a quality control vector for each segment, and determining whether each segment is of adequate quality. Moreover, the method includes calculating a voice replay score and a voice cloning detection score for each adequate quality segment, and determining, by a trained machine learning model operated by the electronic device, a weight for each adequate quality segment. Furthermore, the method includes applying the weight determined for each adequate quality segment to the voice replay and voice cloning scores calculated for the respective adequate quality segment, calculating a decision score, and comparing the decision score against a threshold value. In response to determining the decision score satisfies the threshold value, determining the captured audio data is genuine.

## Description

### BACKGROUND OF THE INVENTION

This invention relates generally to audio data obtained during authentication transactions, and more particularly, to methods and systems for enhancing the detection of fraudulent audio data.

Users are required to prove who they claim to be during authentication transactions conducted under many different circumstances. For example, users may be required to prove their identity when contacting a call center or a merchant while attempting to remotely purchase a product from a merchant system over the Internet. Claims of identity may be proven during authentication transactions based on audio data captured from the user.

During authentication transactions based on audio data it is known for users to speak freely or to utter a passphrase. The passphrase can be divided into segments and a local liveness score computed for each segment. It is known to average the local liveness scores to calculate a composite liveness score which is compared against a threshold value to determine whether or not a live user spoke the passphrase and thus if the audio data is fraudulent. However, some of the segments are of better quality than others. Averaging the local liveness scores reduces the impact of the higher quality segments and increases the impact of the lower quality segments on the liveness determination. As a result, the liveness determination results, and thus the fraudulent audio data detection results tend to be less rigorous, accurate and trustworthy than desired.

Thus, it would be advantageous and an improvement over the relevant technology to provide a method, an electronic device, and a computer-readable recording medium capable of enhancing the detection of fraudulent audio data.

### BRIEF DESCRIPTION OF THE INVENTION

An aspect of the present disclosure provides a method for enhancing the detection of fraudulent audio data including the steps of capturing, by an electronic device, audio data of a user speaking during an authentication transaction, dividing the audio data into segments, determining a quality control vector for each segment, and determining whether each segment is of adequate quality based on the quality control vector for the respective segment. Moreover, the method includes the steps of calculating a voice replay score and a voice cloning detection score for each adequate quality segment, determining, by a trained machine learning model operated by the electronic device, a weight for each adequate quality segment, and applying the weight determined for each adequate quality segment to the voice replay and voice cloning scores calculated for the respective adequate quality segment. A decision score is calculated and compared against a threshold value. In response to determining the decision score satisfies the threshold value, the method determines the captured audio data is genuine.

In an embodiment of the present disclosure, the method further includes determining the captured audio data is fraudulent in response to determining the decision score fails to satisfy the threshold value.

In another embodiment of the present disclosure, the method includes discarding segments of inadequate quality.

In yet another embodiment of the present disclosure, the segments vary in duration.

In yet another embodiment of the present disclosure, the step of calculating the decision score includes combining the determined weights.

Another aspect of the present disclosure provides a non-transitory computer-readable recording medium in an electronic device capable of enhancing the detection of fraudulent audio data. The non-transitory computer-readable recording medium stores instructions which when executed by a hardware processor performs the steps of the methods described above.

Another aspect of the present disclosure provides an electronic device for enhancing the detection of fraudulent audio data including a processor and a memory configured to store data. The electronic device is associated with a network and the memory is in communication with the processor. The memory has instructions stored thereon, when read and executed by the processor, cause the electronic device to capture audio data of a user speaking during an authentication transaction, divide the audio data into segments, determine a quality control vector for each segment, and determine whether each segment is of adequate quality based on the quality control vector for the respective segment.

The instructions which when read and executed by the processor, further cause the electronic device to calculate a voice replay score and a voice cloning detection score for each adequate quality segment, determine, by a trained machine learning model operated by the electronic device, a weight for each adequate quality segment, and apply the weight determined for each adequate quality segment to the voice replay and voice cloning scores calculated for the respective adequate quality segment. Moreover, the instructions which when read and executed by the processor, further cause the electronic device to calculate a decision score and compare the decision score against a threshold value. In response to determining the decision score satisfies the threshold value, the captured audio data is determined to be genuine.

In an embodiment of the present disclosure, the instructions which when read and executed by the processor, further cause the electronic device to determine the captured audio data is fraudulent in response to determining the decision score fails to satisfy the threshold value.

In another embodiment of the present disclosure, the instructions which when read and executed by the processor, further cause the electronic device to discard segments of inadequate quality.

In yet another embodiment of the present disclosure, the segments vary in duration.

In yet another embodiment of the present disclosure, the instructions which when read and executed by the processor, further cause the electronic device to combine the determined weights to calculate the decision score.

Accordingly there is provided a method, a computer program, and an electronic device as detailed in the claims that follow.

### BRIEF DESCRIPTION OF THE DRAWINGS

Figure 1 is a schematic diagram of an example computing system for enhancing the detection of fraudulent audio data according to an embodiment of the present disclosure;
Figure 2 is a more detailed schematic diagram illustrating an electronic device in the system of Figure 1;
Figure 3 is a diagram illustrating an example audio signal; and
Figure 4 is a flowchart illustrating an example method and algorithm for enhancing the detection of fraudulent audio data according to an embodiment of the present disclosure.

### DETAILED DESCRIPTION OF THE INVENTION

The following detailed description is made with reference to the accompanying drawings and is provided to assist in a comprehensive understanding of various example embodiments of the present disclosure. The following description includes various details to assist in that understanding, but these are to be regarded merely as examples and not for the purpose of limiting the present disclosure as defined by the appended claims and their equivalents. The words and phrases used in the following description are merely used to enable a clear and consistent understanding of the present disclosure. In addition, descriptions of well-known structures, functions, and configurations may have been omitted for clarity and conciseness. Those of ordinary skill in the art will recognize that various changes and modifications of the example embodiments described herein can be made without departing from the spirit and scope of the present disclosure.

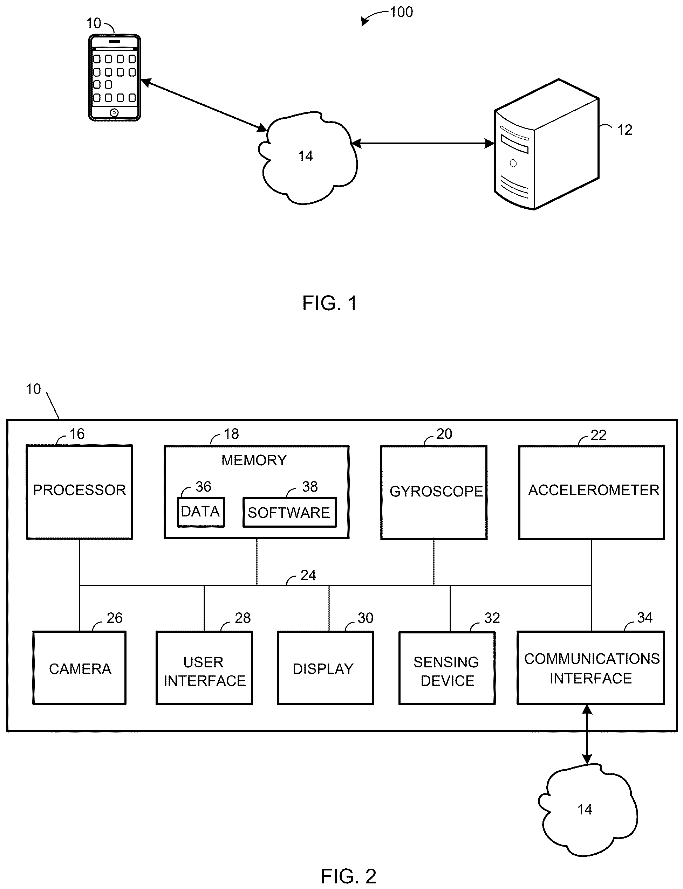

Fig. 1 is a schematic diagram of an example computing system 100 for enhancing the detection of fraudulent audio data according to an embodiment of the present disclosure. As shown in Fig. 1, the main elements of the system 100 include an electronic device 10 and a server 12 communicatively connected via a network 14.

In Fig. 1, the electronic device 10 can be any wireless hand-held consumer electronic device 10 capable of at least downloading applications over the Internet, running applications, capturing and storing data temporarily and/or permanently, and otherwise performing any and all functions described herein by any computer, computer system, server or electronic device 10 included in the system 100. One example of the electronic device 10 is a smart phone. Other examples include, but are not limited to, a cellular phone, a tablet computer, a phablet computer, a laptop computer, and any type of hand-held consumer electronic device 10 having wired or wireless networking capabilities capable of performing the functions, methods, and/or algorithms described herein.

The electronic device 10 is typically associated with a single person who operates the device. The person who is associated with and operates the electronic device 10, as well as speaks freely or speaks a passphrase during enrollment and/or an authentication transaction is referred to herein as a user.

The server 12 can be, for example, any type of server or computer implemented as a network server or network computer.

The network 14 may be implemented as a 5G communications network. Alternatively, the network 14 may be implemented as any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 14 may also be any type of wired network or a combination of wired and wireless networks.

It is contemplated by the present disclosure that the number of electronic devices 10 and servers 12 is not limited to the number of electronic devices 10 and servers 12 shown in the system 100. Rather, any number of electronic devices 10 and servers 12 may be included in the system 100.

Figure 2 is a more detailed schematic diagram illustrating the electronic device 10. The electronic device 10 includes components such as, but not limited to, one or more processors 16, a memory 18, a gyroscope 20, an accelerometer 22, a bus 24, a camera 26, a user interface 28, a display 30, a sensing device 32, and a communications interface 34. General communication between the components in the electronic device 10 is provided via the bus 24.

The processor 16 executes software instructions, or computer programs, stored in the memory 18. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

The memory 18 may be any non-transitory computer-readable recording medium. Non-transitory computer-readable recording media may be any tangible computer-based device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), and disc drive or the like. Furthermore, the non-transitory computer-readable recording media may be implemented as smart cards, SIMs, any type of physical and/or virtual storage, or any other digital source such as a network or the Internet from which computer programs, applications or executable instructions can be read.

The memory 18 may be used to store any type of data 36, for example, data records of users. Each data record is typically for a respective user. The data record for each user may include data such as, but not limited to, passphrases, biometric modality data, biometric templates, acoustic cues, acoustic cue scores, and personal data of a user. A biometric template can be any type of mathematical representation of biometric modality data. Biometric modality data is the data of a biometric modality of a person. For the methods and systems described herein, the biometric modality is voice. Weights to be assigned to segments of a signal may also be stored in the memory 18.

Voice biometric data may be captured by the electronic device 10 by recording a user freely speaking or speaking a passphrase. Captured voice biometric data may be temporarily or permanently stored in the electronic device 10 or in any device capable of communicating with the electronic device 10 via the network 14. Voice biometric data is captured as audio data. Audio signals are audio data. As used herein, capture means to record temporarily or permanently, any data including, for example, biometric modality data of a person. Acoustic cues are related to the quality of the speech represented by an audio signal or audio data. Example acoustic cues include, but are not limited to, signal-to-noise ratios, loudness and speech duration, PESQ (Perceptual Evaluation of Speech Quality), STOI (short-time objective intelligibility) and SI-SDR (Scale-Invariant Signal-to-Distortion Ratio).

The term "personal data" as used herein includes any demographic information regarding a user as well as contact information pertinent to the user. Such demographic information includes, but is not limited to, a user's name, age, date of birth, street address, email address, citizenship, marital status, and contact information. Contact information can include devices and methods for contacting the user.

Additionally, the memory 18 can be used to store any type of software 38. As used herein, the term "software" is intended to encompass an executable computer program that exists permanently or temporarily on any non-transitory computer-readable recordable medium that causes the electronic device 10 to perform at least a portion of the functions, methods, and/or algorithms described herein. Application programs are software and include, but are not limited to, operating systems, Internet browser applications, authentication applications, machine learning algorithms (MLA), machine learning models (MLM), and any other software and/or any type of instructions associated with algorithms, processes, or operations for controlling the general functions and operations of the electronic device 10. The software may also include computer programs that implement buffers and use RAM to store temporary data.

Authentication applications enable the electronic device 10 to conduct user verification and identification (1:C) transactions with any type of authentication data, where "C" is a number of candidates.

Machine learning models have parameters which are modified during training to optimize functionality of the models trained using a machine learning algorithm (MLA). A trained machine learning model may be used to calculate a voice replay score indicating the likelihood that captured voice biometric data was replayed and is thus fraudulent. Such a machine learning model may be trained using genuine and fraudulent voice biometric data captured, for example, during enrollment or authentication transactions. During training, the captured genuine and fraudulent voice biometric data are entered into a computer operating the machine learning algorithm. Typically, thousands of genuine and fraudulent voice biometric data samples are required to adequately train the MLM.

Another machine learning model may be trained to calculate a voice cloning score indicating the likelihood that captured voice biometric data was generated synthetically and is thus fraudulent. Such an MLM may be trained using genuine and fraudulent voice biometric data captured, for example, during enrollment or authentication transactions. During training, the captured genuine and fraudulent voice biometric data are entered into a computer operating the machine learning algorithm. Typically, thousands of genuine and fraudulent voice biometric data samples are required to adequately train the machine learning model.

Yet another machine learning model may be trained to determine weights for different adequate quality segments of audio data. Such a machine learning model may be trained using acoustic cue scores calculated from genuine and fraudulent voice biometric data captured, for example, during enrollment or authentication transactions. During training, the acoustic cue scores are entered into a computer operating the machine learning algorithm. Typically, thousands of acoustic cue scores are required to adequately train the machine learning model to determine accurate and trustworthy weights.

The process of verifying the identity of a user is known as a verification transaction. Typically, during a verification transaction based on voice biometric data a verification template is generated from a spoken passphrase captured during the transaction. The verification template is compared against a corresponding recorded enrolment template of the user and a score is calculated for the comparison. The recorded enrolment template is created during enrolment of the user in an authentication system. If the calculated score is at least equal to a threshold score, the identity of the user is verified as true. Alternatively, the captured voice biometric data may be compared against the corresponding record voice biometric data to verify the identity of the user.

The user interface 28 and the display 30 allow interaction between a user and the electronic device 10. The display 30 may include a visual display or monitor that displays information. For example, the display 30 may be a Liquid Crystal Display (LCD), an active matrix display, plasma display, or cathode ray tube (CRT). The user interface 28 may include a keypad, a keyboard, a mouse, an illuminator, a signal emitter, a microphone, and/or speakers.

Moreover, the user interface 28 and the display 30 may be integrated into a touch screen display. Accordingly, the display may also be used to show a graphical user interface, which can display various data and provide "forms" that include fields that allow for the entry of information by the user. Touching the screen at locations corresponding to the display of a graphical user interface allows the person to interact with the electronic device 10 to enter data, change settings, control functions, etc. Consequently, when the touch screen is touched, the user interface 28 communicates this change to the processor 16, and settings can be changed or user entered information can be captured and stored in the memory 18. The display 30 may function as an illumination source to apply illumination to an object while image data for the object is captured.

The sensing device 32 may include Radio Frequency Identification (RFID) components or systems for receiving information from other devices in the system 100 and for transmitting information to other devices in the system 100. The sensing device 32 may alternatively, or additionally, include components with Bluetooth, Near Field Communication (NFC), infrared, or other similar capabilities. Communications between the electronic device 10 of the user and the server 12 may occur via NFC, RFID, Bluetooth or the like only so a network connection from the electronic device 10 is unnecessary.

The communications interface 34 may include various network cards, and circuitry implemented in software and/or hardware to enable wired and/or wireless communications with other electronic devices 10 (not shown) and the server 12 via the network 14. Communications include, for example, conducting cellular telephone calls and accessing the Internet over the network 14. By way of example, the communications interface 34 may be a digital subscriber line (DSL) card or modem, an integrated services digital network (ISDN) card, a cable modem, or a telephone modem to provide a data communication connection to a corresponding type of telephone line. As another example, the communications interface 34 may be a local area network (LAN) card (e.g., for Ethemet.TM. or an Asynchronous Transfer Model (ATM) network) to provide a data communication connection to a compatible LAN. As yet another example, the communications interface 34 may be a wire or a cable connecting the electronic device 10 with a LAN, or with accessories such as, but not limited to, other electronic devices 10. Further, the communications interface 34 may include peripheral interface devices, such as a Universal Serial Bus (USB) interface, a PCMCIA (Personal Computer Memory Card International Association) interface, and the like.

The communications interface 34 also allows the exchange of information across the network 14. The exchange of information may involve the transmission of radio frequency (RF) signals through an antenna (not shown). Moreover, the exchange of information may be between the electronic device 10, the server 12, other electronic devices (not shown), and other computer systems (not shown) capable of communicating over the network 14.

Examples of other computer systems (not shown) include computer systems of service providers such as, but not limited to, financial institutions, medical facilities, national security agencies, merchants, and authenticators. The electronic devices (not shown) may be associated with any user or with any type of entity including, but not limited to, commercial and non-commercial entities.

The server 12 may include the same or similar components as described herein with regard to the electronic device 10. The server 12 need not include all the same components described herein with regard to the electronic device 10. For example, the server 12 may not include the gyroscope 20 and/or accelerometer 22.

Audio signals may be captured by the electronic device 10 while a user speaks a passphrase and the device 10 is operated by the user or another person. Audio signals may be captured as a continuous analog signal and converted into an audio signal by sampling at any frequency within the range of 8 kHz and 96 kHz. Moreover, audio signals may be provided in Pulse Code Modulation (PCM) in 8, 16, or 24 bits or in compressed format, for example, in flac, mp3, a-law, mu-law and amr, and may be filtered using a pre-emphasis filter that amplifies the high-frequency content of the data. The audio signal is audio data that includes voice biometric data of the user and information about a passphrase spoken by the user. Audio signals may be divided into smaller segments which are each processed individually.

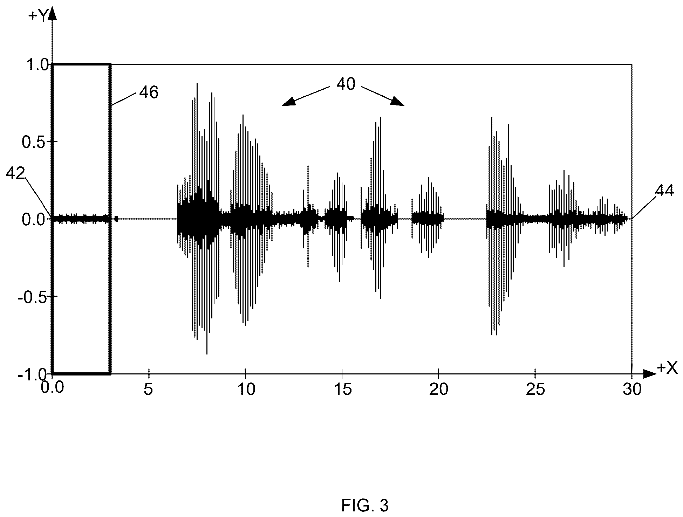

Figure 3 is a diagram illustrating an example audio signal 40. The audio signal 40 is plotted on a Cartesian coordinate system having X and Y-axes. The X-axis represents the number of discrete elements included in the captured audio signal 40 in which each discrete element is captured at a rate, in seconds, equal to the inverse of a sampling frequency. The Y-axis represents the normalized values of the discrete elements of the audio signal 40. Alternatively, the Y-axis may represent the actual values of the discrete elements in the audio signal 40. The audio signal 40 extends from an origin 42 to a terminus 44 and has a duration of about thirty (30) seconds. The duration of the audio signal 40 may vary from, for example, several seconds to several minutes.

A temporal window 46 is located in an initial position flush with the origin 42 and has a duration of, for example, three (3) seconds. Alternatively, the temporal window 46 may have any duration, for example, between one and thirty seconds that facilitates enhancing the detection of fraudulent audio data as described herein. The window 46 is translated in the positive direction along the X-axis over the duration of the signal 40 in three (3) second increments. Consequently, the temporal window 46 occupies ten different positions over the audio signal 40. Although the window 46 is described as being translated in three (3) second increments over the signal 40, it is contemplated by the present disclosure that the window 46 may be alternatively translated over the signal 40 in any time increment that facilitates detecting fraudulent audio data as described herein.

The window 46 can be implemented as a mathematical function that multiples the signal 40 by a window function. That is, a window function that is zero-valued outside of a chosen temporal interval and symmetric around the middle of the interval. The non-zero temporal interval of the window function is translated by the frame rate over the duration of the signal 40. The window function can be a Hamming window function. However, any window function may alternatively be used that is zero-valued outside of a chosen temporal interval and symmetric around the middle of the interval.

A machine learning model (MLM) may be trained to analyze acoustic cues in the audio data for each different position of the window 46. For example, during an authentication transaction such a trained MLM may calculate scores for each acoustic cue in each different position of the window 46. The scores may be included in a quality control vector. The quality control vector can be used to determine the quality of the audio data in each different position of the window 46. Such a trained MLM may be trained, for example, using data such as, but not limited to, acoustic cue scores. During training thousands of acoustic cue scores from genuine and fraudulent audio data may be entered into and processed by the MLM to create a trained MLM capable of determining acoustic cue scores.

Although a trained MLM is described herein as analyzing each of the acoustic cues, it is contemplated by the present disclosure that signal processing techniques may alternatively be used to analyze each of the acoustic cues and calculate the acoustic cue scores. Moreover, it is contemplated by the present disclosure that a combination of signal processing techniques and trained MLM may be used to analyze the acoustic cues and calculate the acoustic cue scores. For example, the signal-to-noise ratio may be analyzed using signal processing techniques while intelligibility metrics such as PESQ, STOI and SI-SDR may be analyzed using a trained MLM.

Generally, a passphrase spoken by a user can be referred to as an utterance. A passphrase is typically a phrase. Example passphrases include but are not limited to, "My voice is my password, verify me" and "I have several busy children, verify me." Alternatively, a passphrase may be a single letter or number, a group of letters or numbers, any combination of letters and numbers, or one or more sentences. Any passphrase may be spoken to generate the audio signal 40.

During authentication transactions based on audio data it is known for users to generate audio data by speaking freely or uttering a passphrase. The audio data can be captured, for example, by an electronic device. The captured audio data can be divided into segments and a local liveness score computed for each segment. It is known to average the local liveness scores to calculate a composite liveness score which is compared against a threshold value to determine whether or not a live user spoke the passphrase and thus if the audio data is fraudulent. However, some of the segments are of better quality than others. Averaging the local liveness scores decreases the impact of the higher quality segments and increases the impact of the lower quality segments on the liveness determination. As a result, the liveness determination results, and thus the fraudulent audio data detection results tend to be less rigorous, accurate and trustworthy than desired.

To address this problem a method for enhancing the detection of fraudulent audio data may be implemented that includes capturing, by the electronic device 10, audio data of a user speaking during an authentication transaction, dividing the audio data into segments, and calculating a quality control score for each segment. A determination can be made regarding whether each segment is of adequate quality based on the quality control score calculated for the respective segment. A replay score and a voice cloning detection score may be calculated for each adequate quality segment. A trained machine learning model operated by the electronic device 10, can determine a weight for each adequate quality segment. The weights can be applied to the respective adequate quality segments. A decision score can be calculated and compared against a threshold value. In response to determining the decision score satisfies the threshold value, the captured audio data can be determined to be genuine.

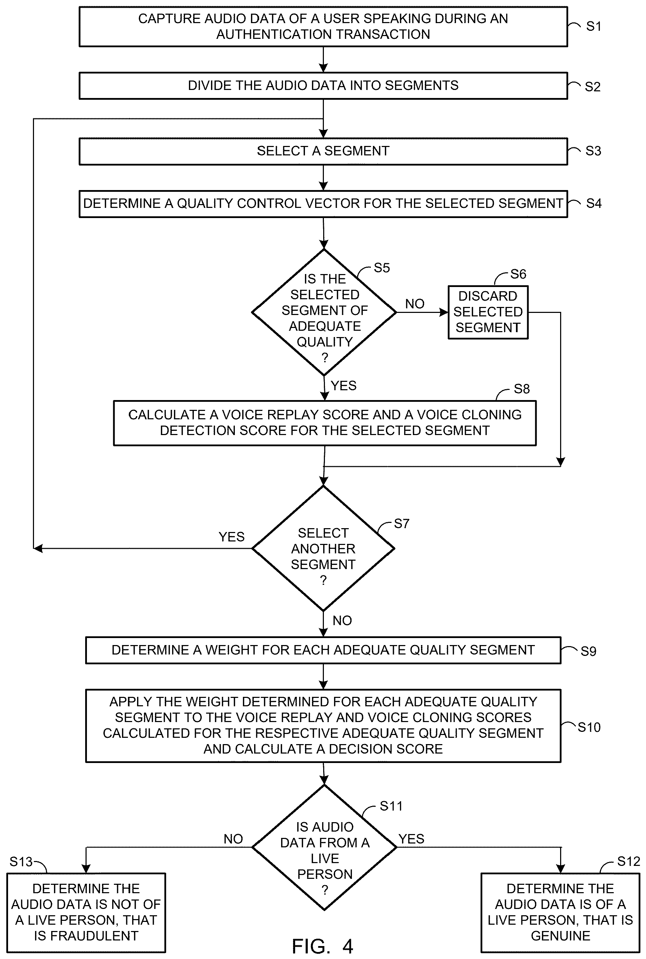

Fig. 4 is a flowchart illustrating an example method and algorithm for enhancing the detection of fraudulent audio data according to an embodiment of the present disclosure. Fig. 4 illustrates example operations performed when the electronic device 10 runs software 38 stored in the memory 18 to enhance the detection of fraudulent audio. A user may cause the electronic device 10 to run the software 38 or the electronic device 10 may automatically run the software 38. The software 38 includes at least one trained machine learning model (MLM).

In step S1, the software 38 executed by the processor 16 can cause the electronic device 10 to capture audio data of a user speaking, for example, during an authentication transaction or during enrollment in a service. Next, in step S2, the software 38 executed by the processor 16 can cause the electronic device 10 to divide the audio data into segments, in step S3, to select a segment and, in step S4, to determine a quality control vector for the selected segment. For example, the software 38 executed by the processor 16 can cause the electronic device 10 to determine acoustic cues to be analyzed for the selected segment and calculate a score for each. The score for each acoustic cue may be referred to as an acoustic cue score. Example acoustic cues include, but are not limited to, the signal-to-noise ratio, the loudness of the selected segment, the duration of the selected segment, the PESQ (Perceptual Evaluation of Speech Quality), the STOI (short-time objective intelligibility), and the SI-SDR (Scale-Invariant Signal-to-Distortion Ratio). The calculated acoustic cue scores constitute the quality control vector.

The software 38 executed by the processor to calculate the acoustic cue scores may include a trained MLM and software for implementing signal processing techniques. A combination of signal processing techniques and trained MLM may be used to analyze the acoustic cues and calculate the acoustic cue scores. For example, signal processing techniques may be used to calculate the acoustic cue score for the signal-to-noise ratio while the trained MLM may be used to calculate the acoustic cue score for the intelligibility metrics PESQ, STOI and SI-SDR or speech duration.

Next, in step S5, the software 38 executed by the processor 16 can cause the electronic device 10 to determine whether the selected segment is of adequate quality based on the quality control vector. For example, the software 38 executed by the processor 16 can cause the electronic device 10 to compare the score for each acoustic cue in the quality control vector against a respective threshold value. If any of the acoustic cue scores fails to satisfy the respective threshold value, the segment is considered to be of inadequate quality. As a result, in step S6, the software 38 executed by the processor 16 can cause the electronic device 10 to discard the selected segment and, in step S7, to determine whether another segment is to be selected. When any of the segments has not been selected another segment is to be selected until all segments have been selected. Each segment may be selected once.

However, when each acoustic cue score satisfies the respective threshold value, in step S8, the software 38 executed by the processor 16 can cause the electronic device 10 to calculate a voice replay score and a voice cloning detection score for the selected segment.

It is contemplated by the present disclosure that the threshold value for each respective acoustic cue score may be satisfied when the acoustic cue score is greater than or equal to the respective threshold value. However, other threshold values may be satisfied when the respective acoustic cue score is equal to or less than the threshold value. Alternatively, the threshold value may include multiple threshold values, each of which is required to be satisfied to satisfy the threshold value.

In step S7, the software 38 executed by the processor 16 can cause the electronic device 10 to determine whether another segment is to be selected. When any of the segments has not been selected another segment is to be selected. Next, in step S3, the software 38 executed by the processor 16 can cause the electronic device 10 to select another segment.

Otherwise, when another segment is not to be selected, in step S9, the software 38 executed by the processor 16 can cause the electronic device 10 to determine a weight for each adequate quality segment. For example, the acoustic cue scores calculated for each adequate quality segment may be processed by a trained MLM operated by the electronic device 10 to determine the weight for each respective adequate quality segment. A different weight is typically determined for each adequate quality segment.

Next, in step S10, the software 38 executed by the processor 16 causes the electronic device 10 to apply the weight determined for each respective adequate quality segment to the voice replay and voice cloning scores calculated for the respective adequate quality segment. Doing so calculates a weighted score for each adequate quality segment. The weight calculated for each adequate quality segment may be applied to the replay and voice cloning scores in any manner, for example, by multiplying the weight by the voice replay score and the voice cloning score.

The weighted score for each adequate quality segment may be combined to calculate a decision score. The decision score may be calculated by, for example, summing the weighted decision scores for all the adequate quality segments.

Next, in step S11, the software 38 executed by the processor 16 can cause the electronic device 10 to determine whether the audio data is from a live person by comparing the decision score against a weighted threshold value. When the decision score satisfies the weighted threshold value, in step S12, the software 38 executed by the processor 16 can cause the electronic device 10 to determine the audio data is of a live person, that is genuine. However, when the decision score fails to satisfy the weighted threshold value, in step S13, the software 38 executed by the processor 16 can cause the electronic device 10 to determine that the audio data is not of a live person, that is fraudulent.

It is contemplated by the present disclosure that the weighted threshold value may be satisfied when the decision score is greater than or equal to the weighted threshold value. However, other weighted threshold values may be satisfied when the decision score is equal to or less than the weighted threshold value. Alternatively, the weighted threshold value may include multiple weighted threshold values, each of which is required to be satisfied to satisfy the weighted threshold value.

It is contemplated by the present disclosure that the software 38, including trained MLMs may alternatively cause the electronic device 10 to conduct any operation or step described herein using any method resulting from capabilities instilled in the MLMs as a result of training.

Using the method and algorithm for enhancing the detection of fraudulent audio data facilitates enhancing the impact of higher quality audio data segments while reducing the impact of lower quality audio data segments in a liveness determination to enhance the accuracy, trustworthiness, and robustness of liveness detection results and thus the detection of fraudulent audio data.

It is contemplated by the present disclosure that the method and algorithm for enhancing the detection of fraudulent audio data may additionally, or alternatively, be used, for example, for verifying users during authentication transactions, detecting the gender of the speaker who produced the audio data, and detecting whether the speaker is an adult or a child. For such additional or alternative uses, the acoustic cues described herein, additional acoustic cues, different acoustic cues, or any combination of the acoustic cues described herein, additional acoustic cues, and different acoustic cues may need to be analyzed.

The example methods and algorithms described herein may be conducted entirely by the electronic device 10 or partly by the electronic device 10 and partly by the server 12 via the network 14. For example, the server 12 may use a MLA to train a machine learning model for use in determining weights for different segments of audio data, while the electronic device 10 may determine the weights using the trained machine learning model, or vice versa. Moreover, the example methods described herein may be conducted entirely on other computer systems (not shown) and/or other electronic devices 10 (not shown). Thus, it is contemplated by the present disclosure that the example methods and algorithms described herein may be conducted using any combination of computers, computer systems, and electronic devices (not shown). Furthermore, data described herein as being stored in the electronic device 10 may alternatively, or additionally, be stored in the server 12, or in any computer system (not shown) or electronic device (not shown) operable to communicate with the electronic device 10 over the network 14.

Additionally, the example methods and algorithms described herein may be implemented with any number and organization of computer program components. Thus, the methods and algorithms described herein are not limited to specific computer-executable instructions. Alternative example methods and algorithms may include different computer-executable instructions or components having more or less functionality than described herein.

The example methods and/or algorithms described above should not be considered to imply a fixed order for performing the method and/or algorithm steps. Rather, the method and/or algorithm steps may be performed in any order that is practicable, including simultaneous performance of at least some steps. Moreover, the method and/or algorithm steps may be performed in real time or in near real time. It should be understood that, for any method and/or algorithm described herein, there can be additional, fewer, or alternative steps performed in similar or alternative orders, or in parallel, within the scope of the various embodiments, unless otherwise stated. Furthermore, the invention is not limited to the embodiments of the methods and/or algorithms described above in detail.

## Claims

1. A method for enhancing the detection of fraudulent audio data comprising the steps of:
capturing, by an electronic device, audio data of a user speaking during an authentication transaction;
dividing the audio data into segments;
determining a quality control vector for each segment;
determining whether each segment is of adequate quality based on the quality control vector for the respective segment;
calculating a voice replay score and a voice cloning detection score for each adequate quality segment;
determining, by a trained machine learning model operated by the electronic device, a weight for each adequate quality segment;
applying the weight determined for each adequate quality segment to the voice replay and voice cloning scores calculated for the respective adequate quality segment and calculating a decision score;
comparing the decision score against a threshold value; and
in response to determining the decision score satisfies the threshold value, determining the captured audio data is genuine.

2. The method according to claim 1, further comprising determining the captured audio data is fraudulent in response to determining the decision score fails to satisfy the threshold value.

3. The method according to claim 1 or 2, further comprising discarding segments of inadequate quality.

4. The method according to any preceding claim, wherein the segments vary in duration.

5. The method according to any preceding claim, said step of calculating the decision score comprising combining the determined weights.

6. An electronic device for enhancing the detection of fraudulent audio data comprising:
a processor; and
a memory configured to store data, said electronic device being associated with a network and said memory being in communication with said processor and having instructions stored thereon which, when read and executed by said processor, cause said electronic device to:
capture audio data of a user speaking during an authentication transaction;
divide the audio data into segments;
determine a quality control vector for each segment;
determine whether each segment is of adequate quality based on the quality control vector for the respective segment;
calculate a voice replay score and a voice cloning detection score for each adequate quality segment;
determine, by a trained machine learning model operated by said electronic device, a weight for each adequate quality segment;
apply the weight determined for each adequate quality segment to the voice replay and voice cloning scores calculated for the respective adequate quality segment and calculate a decision score;
compare the decision score against a threshold value; and
in response to determining the decision score satisfies the threshold value, determine the captured audio data is genuine.

7. The electronic device according to claim 6, wherein the instructions when read and executed by said processor, further cause said electronic device to determine the captured audio data is fraudulent when the decision score fails to satisfy the threshold value.

8. The electronic device according to claim 6 or 7, wherein the instructions when read and executed by said processor, further cause said electronic device to discard segments of inadequate quality.

9. The electronic device according to any one of claims 6 to 8, wherein the segments vary in duration.

10. The electronic device according to any one of claims 6 to 9, wherein the instructions when read and executed by said processor, further cause said electronic device to combine the determined weight to calculate the decision score.

11. A computer program for enhancing the detection of fraudulent audio data, which when executed by a hardware processor is configured to carry out the method of any one of claims 1 to 5.
